# EUROPEAN PATENT APPLICATION

(11) **EP 4 712 254 A1**
(43) Date of publication of application: **18.03.2026**
(21) Application number: 24860433.2
(22) Date of filing: 29.08.2024
(51) Int. Cl.: H01M 50/574, H01M 50/578, H01M 50/581, H01M 50/533, H01M 50/167, H01M 50/342, H01M 50/213, H01M 50/249

(54) **BATTERY, BATTERY PACK COMPRISING BATTERY, AND VEHICLE COMPRISING BATTERY PACK**

(30) Priority: 29.08.2023 KR 20230114002
(71) Applicant: LG Energy Solution, Ltd., Seoul 07335 (KR)
(72) Inventor: JEONG, An-Soo, Daejeon 34122 (KR)
(74) Representative: Goddar, Heinz J.
(86) International application number: PCT/KR2024/012969
(87) International publication number: WO 2025/048514

(57) **Abstract**

A battery according to an embodiment of the present disclosure may include: an electrode assembly comprising an electrode tap having a vulnerable portion formed thereon; a battery housing configured to receive the electrode assembly through an opening formed on one side thereof; a current collector comprising a tap coupling portion electrically coupled to the electrode tap and a housing coupling portion electrically coupled to the battery housing; and a cap configured to cover the opening.

## Description

### TECHNICAL FIELD

The present disclosure relates to a battery, a battery pack including the same, and a vehicle including the battery pack.

This application is based on and claims priority from Korean Patent Application No. 10-2023-0114002, filed on August 29, 2023, with the Korean Intellectual Property Office, the disclosure of which is incorporated herein in its entirety by reference.

### BACKGROUND ART

Fuse devices currently used in secondary batteries include PTC (positive temperature coefficient) thermistors, TCOs (thermal cut-outs), and the like. However, PTCs or TCOs have a disadvantage in which their own resistance increases as they are repeatedly operated, thereby increasing the overall resistance of the circuit.

In addition, all of the above-mentioned devices are operated by heat generated due to overcurrent. That is, the above-mentioned devices are operated to cut off the flow of current only when overcurrent occurs in the circuit current path due to overcharge or the like and the temperature rises according thereto.

Therefore, the above-mentioned devices may operate to block overcurrent only after a situation in which safety is threatened due to heat generation, and they are unable to block overcurrent immediately after the occurrence of a cause that may increase the temperature. As described above, in the case where the internal pressure increases due to abnormal temperature rises inside the secondary battery, if overcurrent blocking is not performed at an appropriate time, safety issues such as fire or explosion may occur.

In addition, since the above-mentioned devices simply operate depending on temperature, they are difficult to use in secondary batteries that exhibit high output, such as battery packs used in vehicles. That is, battery packs for vehicles require a high c-rate, leading to a large amount of heat generated, but devices such as PTCs (positive temperature coefficient) thermistors, TCOs (thermal cut-outs), and thermal fuses have the problem in which they may operate too early when disposed in high-temperature environments.

Therefore, it is necessary to provide a secondary battery that is able to be used in environments where high current flows and has a structure capable of cutting off the current before the temperature rises to a level that may cause a safety problem when an event (e.g., an increase in the internal pressure of the secondary battery), which may cause the increase in temperature, occurs.

### DISCLOSURE

### Technical Problem

The present disclosure is designed to solve the problems of the related art, and therefore the present disclosure is directed to providing a battery having a structure capable of quickly and reliably cutting off the current path of the battery in response to abnormal operation such as an increase in internal pressure and/or temperature due to abnormalities of the battery.

However, the technical problems that the present disclosure seeks to solve are not limited to the above-mentioned problems, and other problems not mentioned above will be clearly understood by those skilled in the art from the description of the invention described below.

### Technical Solution

In one aspect of the present disclosure, there is provided a battery including: an electrode assembly including an electrode tap having a vulnerable portion formed thereon; a battery housing configured to receive the electrode assembly through an opening formed on one side thereof; a current collector including a tap coupling portion electrically coupled to the electrode tap and a housing coupling portion electrically coupled to the battery housing; and a cap configured to cover the opening.

The vulnerable portion may be configured such that a cross-sectional area of the electrode tap is partially reduced.

The electrode assembly may have a structure in which a laminate including a first electrode having a first uncoated portion, a second electrode having a second uncoated portion, and a separator interposed between the first electrode and the second electrode is wound.

The electrode tap may be the first uncoated portion.

The first uncoated portion may include a plurality of segments divided along a winding direction of the electrode assembly.

The plurality of segments may be bent in a radial direction of the electrode assembly so as to be coupled to the tap coupling portion.

The battery housing may have a beading portion having a structure in which an outer circumference thereof is pressed inward.

The housing coupling portion may be coupled to the beading portion.

The vulnerable portion may be provided on at least some of the plurality of segments.

The electrode tap may include: a first area located at an end of the electrode tap, based on the vulnerable portion; and a second area located on the opposite side of the first area, based on the vulnerable portion.

The electrode tap and the current collector may be coupled through the first area, and the second area may not be coupled with the current collector.

The cap may include a venting portion configured to rupture according to an increase in internal pressure of the battery.

The battery may further include a pressurizing member disposed between the current collector and the electrode assembly, and configured to be deformed in its shape toward a core of the electrode assembly according to an increase in internal temperature of the battery, thereby pressurizing the vulnerable portion.

According to another aspect of the present disclosure, there is provided a battery pack including a battery according to an embodiment of the present disclosure.

According to another aspect of the present disclosure, there is provided a vehicle including a battery pack according to an embodiment of the present disclosure.

### Advantageous Effects

According to one aspect of the present disclosure, it is possible to quickly and reliably cur off the current path of the battery in response to abnormal behavior such as an increase in internal pressure and/or temperature due to abnormalities of the battery.

However, the effects obtainable from the present disclosure are not limited to the above-mentioned effects, and other effects not mentioned above will be clearly understood by those skilled in the art from the description of the invention described below.

### DESCRIPTION OF DRAWINGS

The accompanying drawings illustrate a preferred embodiment of the present disclosure and, together with the detailed description of the invention, serve to provide further understanding of the technical idea of the present disclosure, and thus, the present disclosure is not construed as being limited to the drawings.
FIG. 1 is a drawing illustrating the structure of an upper portion of a battery according to an embodiment of the present disclosure.
FIG. 2 is a drawing illustrating the shape deformation of a current collector, which occurs due to an increase in internal pressure in the battery illustrated in FIG. 1.
FIGS. 3 to 7 are drawings illustrating various embodiments of a vulnerable portion formed on an electrode tap of the present disclosure.
FIGS. 4 to 7 are drawings illustrating various modified examples of the vulnerable portion illustrated in FIG. 3.
FIG. 8 is a drawing illustrating an electrode constituting an electrode assembly of the present disclosure.
FIGS. 9 and 10 are drawings illustrating a structure in which an electrode tap and a current collector of the present disclosure are combined.
FIGS. 11 and 12 are drawings illustrating a pressurizing member of the present disclosure.
FIG. 13 is a drawing illustrating the structure of a lower portion of a battery according to an embodiment of the present disclosure.
FIG. 14 is a drawing illustrating a battery pack according to an embodiment of the present disclosure.
FIG. 15 is a drawing illustrating a vehicle according to an embodiment of the present disclosure.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation. Therefore, the configurations proposed in the embodiments and drawings of this specification indicate only the most preferable embodiment of the present disclosure and do not represent all technical ideas of the present disclosure, so it should be understood that various equivalents and modifications could be made thereto at the time of filing the application.

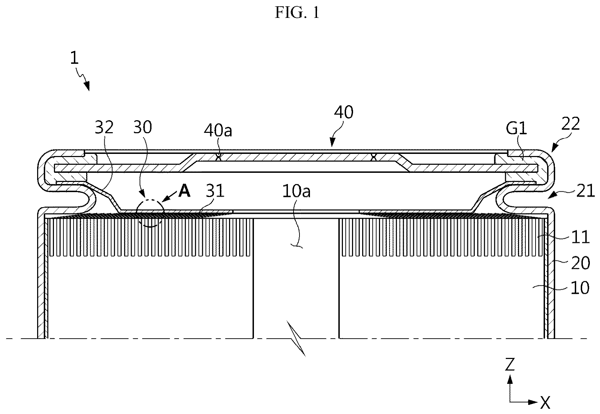

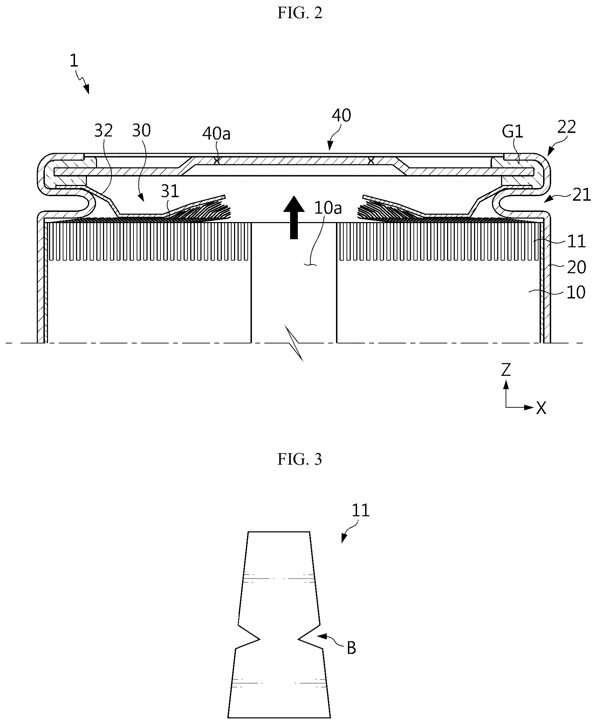

First, a battery 1 according to an embodiment of the present disclosure will be described with reference to FIGS. 1 to 7. FIG. 1 is a drawing illustrating the structure of an upper portion of a battery according to an embodiment of the present disclosure, FIG. 2 is a drawing illustrating the shape deformation of a current collector, which occurs due to an increase in internal pressure, in the battery illustrated in FIG. 1, and FIGS. 3 to 7 are drawings illustrating various embodiments of a vulnerable portion formed on an electrode tap of the present disclosure.

Referring to FIGS. 1 to 3, a battery 1 according to an embodiment of the present disclosure may include an electrode assembly 10, a battery housing 20, a current collector 30, and a cap 40. The battery 1 of the present disclosure may be, for example, a cylindrical battery.

The electrode assembly 10 may have an electrode tap (first electrode tap) 11 on which a vulnerable portion B is formed. The battery housing 20 may be configured to receive the electrode assembly 10 through an opening formed on one side thereof. The current collector 30 may include a tap coupling portion 31 electrically coupled with the electrode tap 11, and a housing coupling portion 32 electrically coupled with the battery housing 20. The cap 40 may be configured to cover the opening of the battery housing 20.

According to this configuration of the present disclosure, when force is applied to the coupling portion between the electrode assembly 10 and the current collector 30, a fracture may occur in the vulnerable portion B formed on the electrode tap 11. As described above, when a fracture occurs in the electrode tap 11, the flow of current may be cut off inside the battery 1.

If the internal temperature and/or the internal pressure increases due to an abnormality of the battery 1, the cap 40 may be broken at the opening of the battery housing 20 and/or the sealing structure of the coupling between the cap 40 and the housing 20 may collapse. Accordingly, the core of the electrode assembly 10 may rise toward the opening of the battery housing 20, and force may also be applied upward to the current collector 30 electrically connected to the electrode assembly 10. At this time, a fracture occurs in the vulnerable portion B of the electrode tap 11 so that the electrical connection between the current collector 30 and the electrode assembly 10 is released, thereby preventing propagation of a thermal event.

The vulnerable portion B may be configured such that the cross-sectional area of the electrode tap 11 is partially reduced. In the case where the cross-sectional area of the electrode tap 11 is partially reduced by the vulnerable portion B, the fracture of the electrode tap 11 may be accelerated due to an increase in resistance in the area where the vulnerable portion B is formed. Even if the increase in the internal temperature due to the abnormality of the battery 1 is not sufficient to reach a temperature required for the fracture of the electrode tap 11, heat generated due to an increase in resistance according to a reduction in the cross-sectional area of the vulnerable portion B may further contribute to the fracture of the electrode tap 11 to be more quickly processed.

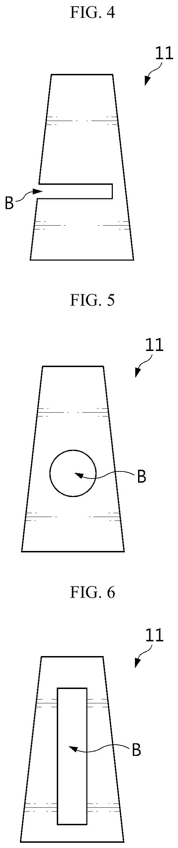

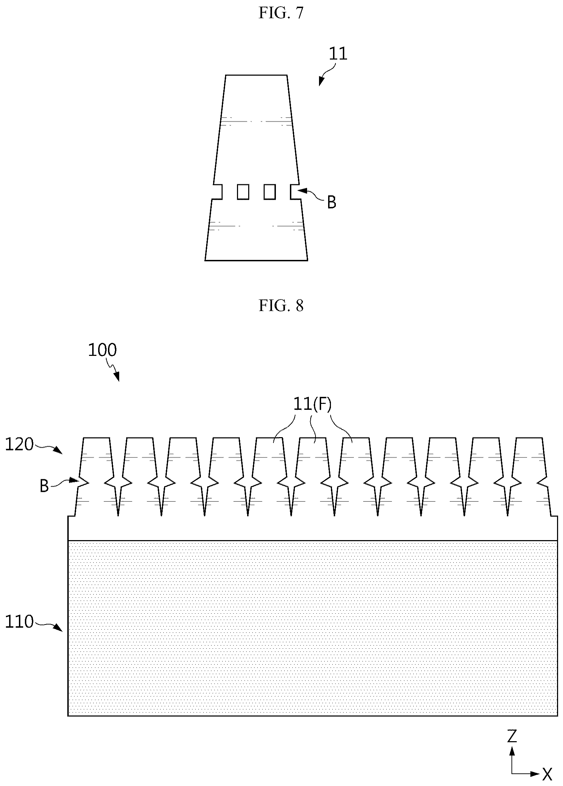

Referring to FIGS. 3 to 7, any shape may be applied to form the vulnerable portion B on the electrode tap 11 as long as it is able to partially reduce the cross-sectional area of the electrode tap 11 between both ends of the electrode tap 11 in the extension direction. For example, the vulnerable portion B may have a structure that is notched inward from both sides of the electrode tap 11 as shown in FIG. 3. On the other hand, the vulnerable portion B may have a structure that is notched inward from one side of the electrode tap 11 as illustrated in FIG. 4. In addition, the vulnerable portion B may be formed by a hole, such as an approximately circular or rectangular hole, penetrating the electrode tap 11 as illustrated in FIGS. 5 and 6. In addition, referring to FIG. 7, the vulnerable portion B may be formed by a dotted fracture line extending from one side of the electrode tap 11 to the other side.

Next, a relationship between the electrode tap 11 and the electrode assembly 10 of the present disclosure will be described in detail with reference to FIG. 8 in addition to FIGS. 1 and 2. FIG. 8 is a drawing illustrating an electrode constituting the electrode assembly of the present disclosure.

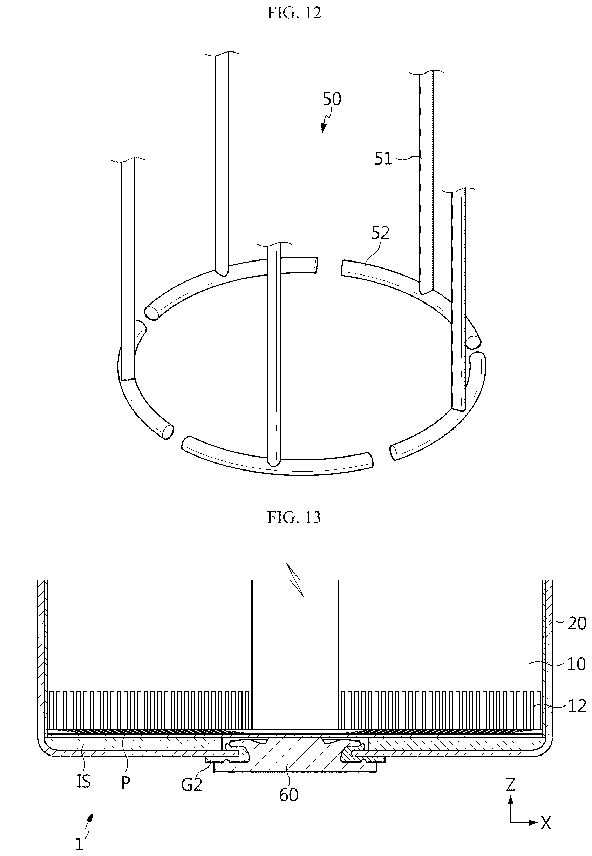

Referring to FIG. 8 together with FIGS. 1 and 2, the electrode tap 11 may be a part of the electrode assembly 10. The electrode assembly 10 may have a structure obtained by winding a laminate including a first electrode 100 having a first uncoated portion 11, a second electrode (not shown) having a second uncoated portion 12 (see FIG. 13), and a separator (not shown) interposed between the first electrode and the second electrode. The first electrode may be a positive electrode or a negative electrode, and the second electrode may be an electrode having a polarity opposite that of the first electrode.

As shown in FIG. 8, the first electrode 100 may include a first coated portion 110 that is an area where an electrode active material is applied, and a first uncoated portion 120 that is an area where an electrode active material is not applied. The uncoated portion 120 may be the electrode tap 11 of the present disclosure.

Meanwhile, the first uncoated portion 120 may include a plurality of segments F divided in the winding direction of the electrode assembly 10. The plurality of segments F may be formed by notching the first uncoated portion 120 to a predetermined depth. The vulnerable portion B may be provided on at least some of the plurality of segments F.

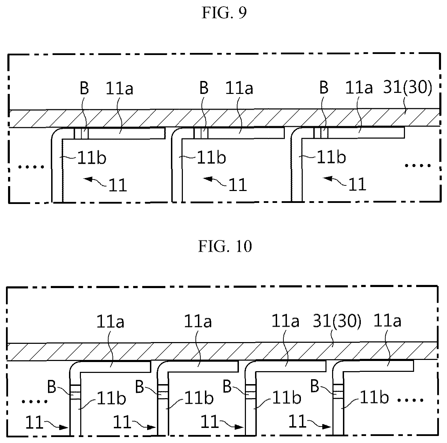

Referring to FIGS. 9 and 10 along with FIGS. 1 and 2, a coupling structure between the electrode tap 11 and the current collector 30 of the present disclosure will be described. FIGS. 9 and 10 are drawings illustrating a structure in which an electrode tap and a current collector of the present disclosure are combined.

Referring to FIGS. 9 and 10 together with FIGS. 1 and 2, the electrode tap 11, i.e., the plurality of segments F (see FIG. 8), may be bent along the radial direction of the electrode assembly 10 toward the winding center hole 10a or in the opposite direction thereof so as to be coupled to the tap coupling portion 31 of the current collector 30.

The electrode tap 11 may include a first area 11a located at the end of the electrode tap 11, based on the vulnerable portion B, and a second area 11b located on the opposite side of the first area 11a, based on the vulnerable portion B. The coupling between the electrode tap 11 and the current collector 30 may be performed through the first area 11a, and the second area 11b may not be coupled to the current collector 30.

As described above, in the case where the first area 11a is coupled to the current collector 30 and where the second area 11b is not coupled to the current collector 30, tension may be applied to the vulnerable portion B of the electrode tap 11 when the current collector 30 rises upward due to a thermal event occurring inside the battery 1. If both the first area 11a and the second area 11b are coupled to the current collector 30, even if the current collector 30 rises upward, tension may not be sufficiently applied to the vulnerable portion B, which makes it difficult to quickly cut off current through the fracture of the electrode tap 11.

Meanwhile, as shown in FIG. 9, if the electrode tap 11 is bent within the second area 11b, the second area 11b of the electrode tap 11, as well as the first area 11a, may come into partial contact the tap coupling portion 31 of the current collector 30. In this case, a coupling portion by welding may not be formed in the area where the tap coupling portion 31 of the current collector 30 and the second area 11b of the electrode tap 11 come into contact with each other. This is intended to ensure that sufficient tension is applied to the vulnerable portion B when the current collector 30 rises, as described above.

On the other hand, as shown in FIG. 10, in the case where the electrode tap 11 is bent within the first area 11a, a coupling portion by welding may be formed over the entire area where the tap coupling portion 31 of the current collector 30 and the electrode tap 11 come into contact with each other.

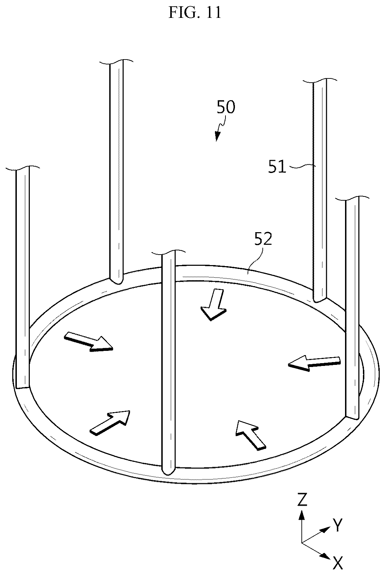

Next, a pressurizing member 50 of the present disclosure will be described with reference to FIGS. 11 to 12 together with FIGS. 1 to 3. FIGS. 11 and 12 are drawings illustrating a pressurizing member of the present disclosure.

Referring to FIGS. 11 and 12 together with FIGS. 1 to 3, the battery 1 of the present disclosure may include a pressurizing member 50. The pressurizing member 50 may be disposed between the current collector 30 and the electrode assembly 10. The pressurizing member 50 may be configured to be deformed in its shape toward the core of the electrode assembly 10 as the internal temperature of the battery 1 increases, thereby pressurizing the vulnerable portion B of the electrode tap 11.

The pressurizing member 50 may be connected to the current collector 30. The pressurizing member 50 may be connected to the tap coupling portion 31 of the current collector 30. The pressurizing member 50 and the current collector 30 may be formed integrally with each other. The pressurizing member 50 may include a connecting portion 51 connected to the current collector 30 and a pressurizing portion 52 connected to the connecting portion 51. A plurality of connecting portions 51 may be provided.

The connecting portions 51 and/or the pressurizing portion 52 may be deformed in their shapes according to an increase in temperature due to a thermal event. The pressurizing portion 52 may pressurize the vulnerable portion B of the electrode tap 11 by the shape deformation of the connecting portions 51 and/or the pressurizing portion 52.

The pressurizing portion 52 may be substantially configured as a rim that extends continuously along the circumferential direction of the electrode assembly 10 as illustrated in FIG. 11. In this case, the connecting portions 51 may be configured to connect the rim and the current collector 30. The pressurizing portion 52 may include a shape memory alloy configured such that its inner diameter is reduced at a predetermined temperature or above. In this case, the pressurizing portion 52 may be shape-deformed such that its diameter is reduced as the temperature rises due to the thermal event, thereby applying force to the vulnerable portion B by the pressurizing portions 52 to induce more quick fracture.

The pressurizing portion 52 may be configured to extend discontinuously along the circumferential direction of the electrode assembly 10 as shown in FIG. 12. In this case, the connecting portion 51 may include a bi-metal. The connecting portion 51 may include a first portion that is relatively close to the core of the electrode assembly 10 and includes a metal having a first thermal expansion coefficient, and a second portion that is relatively far from the core of the electrode assembly 10 and includes a metal having a second thermal expansion coefficient greater than the first thermal expansion coefficient. In the case where the connecting portion 51 is configured described above, if the internal temperature of the battery 1 rises, the end of the connecting portion 51 may be bent toward the core of the electrode assembly 10 due to the difference in thermal expansion coefficient between the first metal and the second metal, and thus, the pressurizing portion 52 connected to the end of the connecting portion 51 may pressurize the vulnerable portion B of the electrode tap 11.

Referring back to FIGS. 1 and 2, the battery housing 20 may include a conductive metal. The battery housing 20 may have a beading portion 21 having a structure in which the outer circumference thereof is pressed inward. The beading portion 21 may be formed on the top of the electrode assembly 10. The diameter of the inner space of the battery housing 20 may be reduced in the area where the beading portion 21 is formed, thereby preventing the electrode assembly 10 from popping out of the battery housing 20.

The battery housing 20 may have a crimping portion 22 that has a bent shape to extend from the upper end of the beading portion 21 and wrap around the edge of the cap 40. The crimping portion 22 may be configured to fix the cap 40. A sealing member G1 may be interposed between the inner surface of the battery housing 20 and the cap 40 in the area where the crimping portion 22 is formed.

The housing coupling portion 32 of the current collector 30 may be electrically coupled to the inner surface of the battery housing 20. The housing coupling portion 32 may be electrically coupled to the beading portion 21 of the battery housing 20. The housing coupling portion 32 may be interposed between the beading portion 21 and the sealing member G1.

The cap 40 may have a venting portion 40a configured to be weaker than the remaining area of the cap 40. The venting portion 40a may be configured such that, for example, the thickness of the cap 40 is partially reduced. The venting portion 40a may be formed by, for example, notching one side or both sides of the cap 40. The venting portion 40a may be configured to rupture when the internal pressure of the battery 1 reaches a preset pressure. When the venting portion 40a ruptures due to an increase in the internal pressure of the battery 1, the pressure may be relieved through the ruptured area, and at this time, an upward force may be applied to the core area of the electrode assembly 10 and the current collector 30. When the force is applied upward to the current collector 30, a fracture may occur in the vulnerable portion B formed on the electrode tap 11 of the present disclosure described above, thereby cutting off the current in the battery 1 and preventing the propagation of a thermal event.

Next, the structure of a lower portion of the battery 1 according to an embodiment of the present disclosure will be described with reference to FIG. 13. FIG. 13 is a drawing illustrating the structure of a lower portion of a battery according to an embodiment of the present disclosure.

Referring to FIG. 13, the battery 1 may include a terminal 60 electrically connected to the electrode assembly 10. The terminal 60 may have an opposite polarity to the battery housing 20. In the present disclosure, the battery housing 20 may be electrically connected to the first electrode of the electrode assembly 10, and the terminal 60 may be electrically connected to the second electrode of the electrode assembly 10. The terminal 60 may be electrically connected to the electrode assembly 10 through a closed portion formed on the opposite side of the opening of the battery housing 20. A portion of the terminal 60 may extend outside the battery housing 20. A sealing member (second sealing member) G2 may be interposed between the terminal 60 and the battery housing 20 to prevent contact between the components having different polarities and to seal the battery 1.

The battery 1 may include a current collector (second current collector) P configured to electrically connect the electrode assembly 10 and the terminal 60. The current collector P may be electrically coupled to the second electrode tap 12 of the electrode assembly 10. The second electrode tap 12 may correspond to a second uncoated portion of the electrode assembly 10. The second uncoated portion may include a plurality of segments, similar to the first uncoated portion described above, and the plurality of segments may be bent and connected to the current collector P.

The battery 1 may include an insulator IS interposed between the electrode assembly 10 and the inner surface of the closed portion of the battery housing 20 or between the current collector P and the inner surface of the closed portion of the battery housing 20.

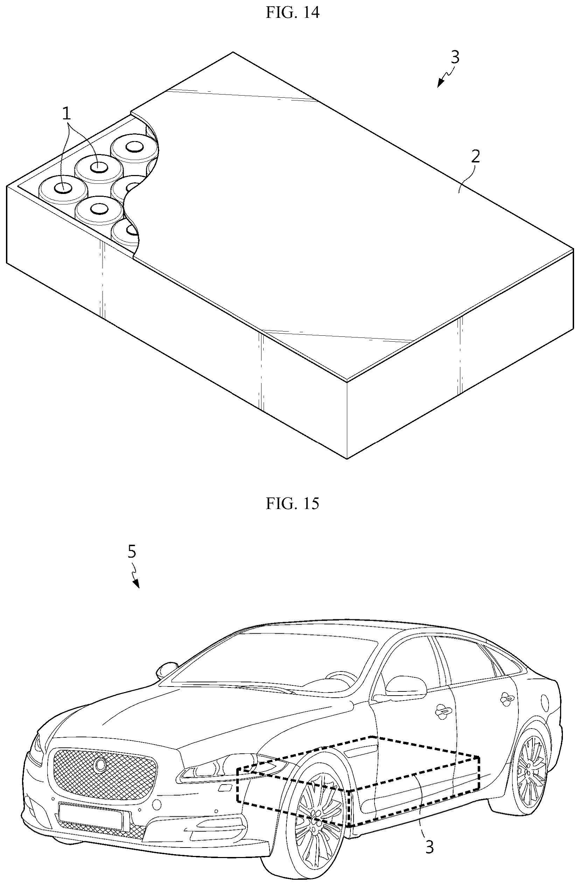

Next, a battery pack 3 according to an embodiment of the present disclosure will be described with reference to FIG. 14. FIG. 14 is a drawing illustrating a battery pack according to an embodiment of the present disclosure.

Referring to FIG. 14 together with FIG. 1 and FIG. 13, a battery pack 3 according to an embodiment of the present disclosure may include a battery 1 according to an embodiment of the present disclosure and a pack housing 2 accommodating the battery 1. A plurality of batteries 1 may be provided, and the plurality of batteries 1 may be electrically connected to each other. The battery 1 of the present disclosure may be configured such that the terminal 60 and the closed portion of the housing 20 may function as a first electrode terminal and a second electrode terminal, respectively. Therefore, the plurality of batteries 1 may be disposed in the pack housing 2 such that the terminals 60 of all the batteries 1 are directed upward, so that electrical connection may be made at the top of the battery 1.

Next, a vehicle 5 according to an embodiment of the present disclosure will be described with reference to FIG. 15. FIG. 15 is a drawing illustrating a vehicle according to an embodiment of the present disclosure.

Referring to FIG. 15, a vehicle 5 according to an embodiment of the present disclosure may include a battery pack 3 according to an embodiment of the present disclosure. The vehicle 5 may be configured to drive by receiving power from the battery pack 3. The vehicle 5 may be, for example, an electric vehicle or a hybrid vehicle.

As described above, although the present disclosure has been described with reference to limited embodiments and drawings, the present disclosure is not limited thereto, and various modifications and variations are possible within the technical idea of the present disclosure and the scope of equivalence of the claims to be described below by those skilled in the art to which the present disclosure pertains.

### [Description of Reference numerals]

1: Battery
2: Pack housing
3: Battery pack
5: Vehicle
10: Electrode assembly
10a: Winding center hole
11: Electrode tap (first electrode tap)
F: Segments
B: Vulnerable portion
12: Electrode tap (second electrode tap)
100: Electrode (first electrode)
110: Coated portion
120: Uncoated portion
20: Battery housing
21: Beading portion
22: Crimping portion
30: Current collector (first current collector)
31: Tap coupling portion
32: Housing coupling portion
40: Cap
40a: Venting portion
G1: Sealing member (first sealing member)
50: Pressurizing member
51: Connecting portion
52: Pressurizing portion
60: Terminal
G2: Sealing member (second sealing member)
P: Current collector (second current collector)
IS: Insulator

## Claims

1. A battery comprising:
an electrode assembly comprising an electrode tap having a vulnerable portion formed thereon;
a battery housing configured to receive the electrode assembly through an opening formed on one side thereof;
a current collector comprising a tap coupling portion electrically coupled to the electrode tap and a housing coupling portion electrically coupled to the battery housing; and
a cap configured to cover the opening.

2. The battery according to claim 1,
wherein the vulnerable portion is configured such that a cross-sectional area of the electrode tap is partially reduced.

3. The battery according to claim 1,
wherein the electrode assembly has a structure
in which a laminate comprising a first electrode having a first uncoated portion, a second electrode having a second uncoated portion, and a separator interposed between the first electrode and the second electrode is wound.

4. The battery according to claim 3,
wherein the electrode tap is the first uncoated portion.

5. The battery according to claim 4,
wherein the first uncoated portion comprises
a plurality of segments divided along a winding direction of the electrode assembly.

6. The battery according to claim 5,
wherein the plurality of segments are bent in a radial direction of the electrode assembly so as to be coupled to the tap coupling portion.

7. The battery according to claim 1,
wherein the battery housing has a beading portion having a structure in which an outer circumference thereof is pressed inward.

8. The battery according to claim 7,
wherein the housing coupling portion is
coupled to the beading portion.

9. The battery according to claim 5,
wherein the vulnerable portion is
provided on at least some of the plurality of segments.

10. The battery according to claim 1,
wherein the electrode tap comprises:
a first area located at an end of the electrode tap, based on the vulnerable portion; and
a second area located on the opposite side of the first area, based on the vulnerable portion.

11. The battery according to claim 10,
wherein the electrode tap and the current collector are coupled through the first area, and
wherein the second area is not coupled with the current collector.

12. The battery according to claim 1,
wherein the cap comprises a venting portion configured to rupture according to an increase in internal pressure of the battery.

13. The battery according to claim 1,
further comprising a pressurizing member disposed between the current collector and the electrode assembly, and configured to be deformed in its shape toward a core of the electrode assembly according to an increase in internal temperature of the battery, thereby pressurizing the vulnerable portion.

14. A battery pack comprising a battery according to any one of claims 1 to 13.

15. A vehicle comprising a battery pack according to claim 14.
